(19) Europäisches Patentamt European Patent Office Office européen des brevets

(11) **EP 2 479 753 A1**

(12) **EUROPEAN PATENT APPLICATION**
published in accordance with Art. 153(4) EPC

(43) Date of publication:
**25.07.2012 Bulletin 2012/30**

(51) Int Cl.:
*G11B 19/12* (2006.01)  *G11B 7/004* (2006.01)
*G11B 19/02* (2006.01)

(21) Application number: **10816857.6**

(22) Date of filing: **08.09.2010**

(86) International application number:
**PCT/JP2010/005504**

(87) International publication number:
**WO 2011/033742 (24.03.2011 Gazette 2011/12)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.09.2009 JP 2009213541**

(71) Applicant: **JVC KENWOOD Corporation**
**Yokohama-shi, Kanagawa 221-0022 (JP)**

(72) Inventor: **YAMADA, Yasuyuki**
**Yokohama-shi**
**Kanagawa 221-0022 (JP)**

(74) Representative: **Schmidbauer, Andreas Konrad**
**Wagner & Geyer**
**Patent- und Rechtsanwälte**
**Gewürzmühlstrasse 5**
**80538 München (DE)**

(54) **OPTICAL DISC DRIVE DEVICE**

(57)     An optical disk drive device 100 includes: a tray 2 provided with an outer disk tray on which an optical disk is mounted; an electrode provided on the outer disk tray; an electrostatic capacitance sensor unit 3 configured to sense electrostatic capacitance between the electrode and an optical disk mounted in proximity to the electrode; a storage unit 4 configured to store a table that identifies electrostatic capacitance between each of different types of optical disks and the electrode occurring when the optical disk is mounted in proximity to the electrode; and a determination unit 5 configured to determine the type of the optical disk mounted on the tray, based on a sensor result obtained by the electrostatic capacitance sensor unit 3 and the table.

FIG.6

**Description**

[TECHNICAL FIELD]

The present invention relates to an optical disk drive device adapted to handle optical disks.

[BACKGROUND ART]

Optical disks currently available include Compact Discs (CD), which use infrared laser, Digital Versatile Discs (DVDs), which use red laser, and Blu-ray Discs (BD), which use blue purple laser. Some optical disk drive devices are capable of playing CDs, DVDs, and BDs.

The related-art optical disk drive device is designed to identify the type of an optical disk mounted on a disk tray by irradiating the disk with one of an infrared laser beam, a red laser beam, and a blue purple laser beam, sensing the reflected beam, and determining whether the objective lens can be located to focus the beam onto the information recording layer. For example, the related-art optical disk irradiates the optical disk with an infrared laser beam. If the objective lens can be located to focus the beam onto the information recording layer, the related-art optical disk drive device verifies the type of beam then in use to identify the type of optical disk mounted.

If it is determined that the objective lens cannot be located to focus the beam onto the information recording layer, the related-art optical disk irradiates the disk with a beam of the next type (e.g., a red laser beam), senses the reflected beam, and similarly identifies the disk type. If it is determined that the objective lens can be located to focus the beam onto the information recording layer, the related-art optical disk drive device verifies the type of beam then in use to identify the type of optical disk mounted.

If it is still determined that the objective lens cannot be located to focus the beam onto the information recording layer, the related-art disk drive device determines that the last beam used (e.g., the blue purple laser beam) is the beam adapted for the mounted optical disk and identifies the type of mounted optical disk accordingly.

[patent document No. 1] JP10-143986

[DISCLOSURE OF THE INVENTION]

[PROBLEM TO BE SOLVED BY THE INVENTION]

In this way, the related-art optical disk drive identifies the type of mounted optical disk by emitting an infrared laser beam, a red laser beam, and a blue purple laser beam, or some of the beams. In other words, the related-art disk drive device often has to change the beam emitted in order to identify the type of mounted optical disk. Further, the related-art optical disk drive has to change the objective lens in order to change from the infrared laser beam or the red laser beam to the blue purple laser beam, or vice versa.

Therefore, the related-art optical disk drive requires a long period of time to identify the type of mounted optical disk. This will not be convenient for users.

A purpose of the present invention is to provide an optical disk drive device capable of determining the type of optical disk mounted on a disk tray in a short period of time.

[MEANS TO SOLVE THE PROBLEM]

To resolve the aforementioned problem and meet the purpose as described above, the optical disk drive device according to at least one embodiment of the present invention comprises: a tray provided with a disk tray on which an optical disk is mounted; an accommodating unit configured to accommodate the tray in a housing; an electrode provided on the disk tray; an electrostatic capacitance sensor unit configured to sense electrostatic capacitance between the electrode and an optical disk mounted in proximity to the electrode; a storage unit configured to store a table that identifies electrostatic capacitance between each of different types of optical disks and the electrode occurring when the optical disk is mounted in proximity to the electrode; and a determination unit configured to determine the type of the optical disk mounted in proximity to the electrode, based on a sensor result obtained by the electrostatic capacitance sensor unit and the table.

[ADVANTAGE OF THE PRESENT INVENTION]

The present invention provides an optical disk drive device capable of determining the type of optical disk mounted on a disk tray in a short period of time.

[BRIEF DESCRIPTION OF THE DRAWINGS]

Fig. 1 shows the structure of an optical disk drive device according to the embodiment;
Fig. 2 shows the structure of the optical disk drive in which the electrodes are not provided in the outer disk tray;
Fig. 3 shows the surface of the tray in which the electrodes are not provided;
Fig. 4 shows the tray the surface of which is coated with a paint mask;
Fig. 5 shows the tray provided with the electrodes on the surface;
Fig. 6 is a functional block diagram of the optical disk drive device according to the embodiment;
Fig. 7 shows a partial cross section of a CD, Fig. 7B shows a partial cross section of a DVD, and Fig. 7C shows a partial cross section of a BD;
Fig. 8 shows a circuit formed by the optical disk and the electrodes;

Fig. 9 shows a circuit shown to describe the method of sensing the electrostatic capacitance of the whole circuit shown in Fig. 8;

Fig. 10 shows a table that identifies the electrostatic capacitance between each of a CD, VD, and BD, and the electrodes;

Fig. 11 shows that the optical disk is mounted on the electrodes so as to be in contact with the electrodes;

Fig. 12 shows that the optical disk is mounted on the electrodes without being in contact with the electrodes;

Fig. 13 shows an equivalent circuit occurring when the two electrodes are connected via a conductor;

Fig. 14 shows a circuit for eliminating the chance of falsely determining that an optical disk is mounted on a tray despite the fact that no optical disk are mounted;

Fig. 15 shows a waveform centered on a voltage equal to the bias voltage and not exhibiting attenuation from the output waveform of the ac signal generator;

Fig. 16 shows a waveform centered on a voltage equal to the bias voltage and exhibiting attenuation from the output waveform of the ac signal generator;

Fig. 17 shows a waveform centered on a voltage lower than the bias voltage and exhibiting attenuation from the output waveform of the ac signal generator; and

Fig. 18 shows a circuit for sensing that a human body comes into contact with or approaches the electrodes.

[EMBODIMENT OF THE INVENTION]

A description will now be given of an embodiment of the present invention with reference to the drawings.

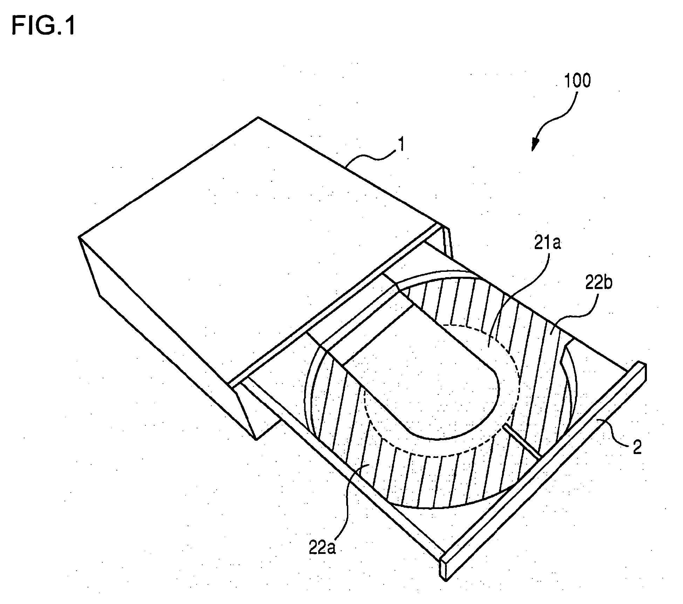

Fig. 1 shows the structure of an optical disk drive device 100 according to the embodiment. The optical disk drive device 100 includes a housing 1 and a tray 2. Fig. 1 is a perspective view of the optical disk drive device 100 showing a part of the tray 2 located outside the housing 1.

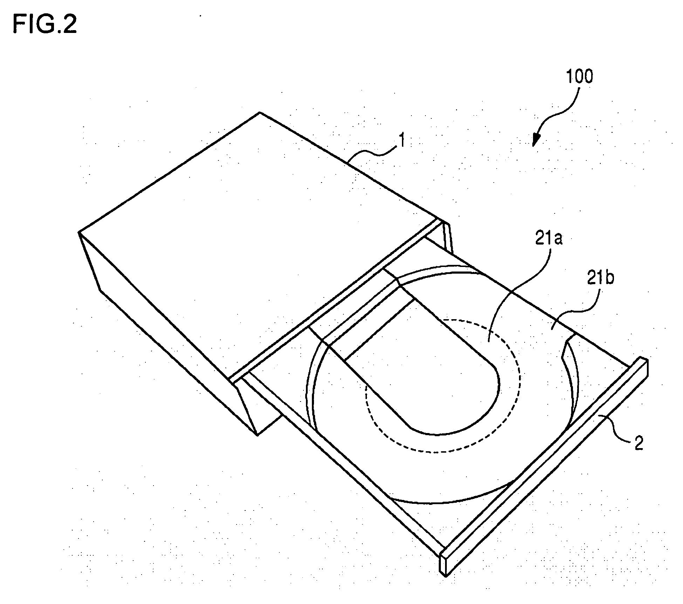

As shown in Fig. 1, the tray 2 is provided with an inner disk tray 21a which is provided at the center and on which an optical disk having a first diameter (e.g., 8cm) is mounted. As shown in Fig. 2, the tray 2 is provided with an outer disk tray 21b (not shown in Fig. 1 for convenience) which is provided outside the inner disk tray 21a and on which an optical disk having a second diameter (e.g., 12 cm) longer than the first diameter is mounted. The outer disk tray 21b is provided one step higher than the inner disk tray 21a. Fig. 2 shows the structure of the optical disk drive device 100 in which a first electrode 22a and a second electrode 22b (described later) are not provided on the outer disk tray 21b.

As shown in Fig. 1, the tray 2 also has a first electrode 22a and a second electrode 22b provided on the outer disk tray 21b. The first and second electrodes 22a and 22b are thin films formed by using a conductive paint. An electrode formed by a conductive paint does not lose its capabilities due to a slight damage unless the electrode is severed by a large damage. The first and second electrodes 22a and 22b are provided in isolation to substantially halve the area of the outer disk tray 21b. The first and second electrodes 22a and 22b are provided to substantially halve the area of the outer disk tray 21b to secure as large area of contact between the first/second electrodes 22a/22b and the optical disk mounted thereon as possible for the purpose of sensing electrostatic capacitance (described later) accurately.

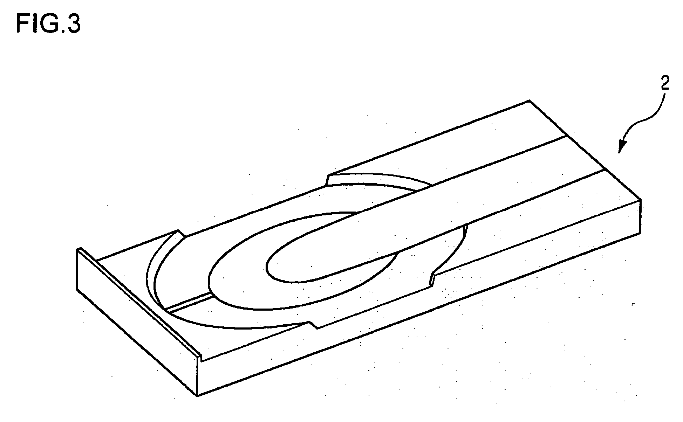

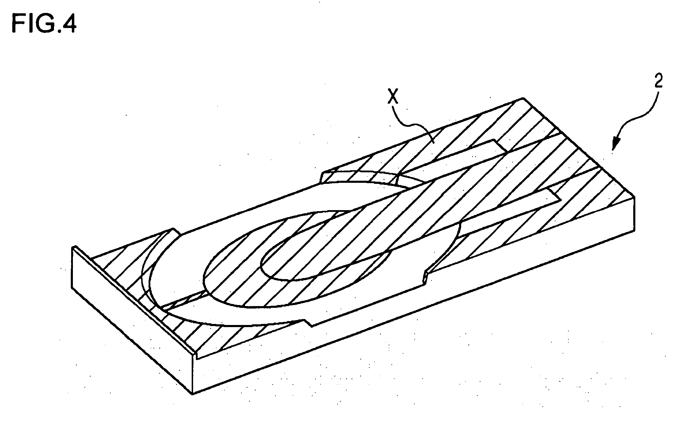

The method of manufacturing the first and second electrodes 22a and 22b will be described with reference to Figs. 3 through 5. Fig. 3 shows the surface of the tray 2 on which the first and second electrodes 22a and 22b are not provided. The surface of the tray 2 in this state is coated with a paint mask X, as shown in Fig. 4. A bore is provided in the paint mask X. Fig. 4 shows the tray 2 the surface of which is coated with a paint mask X.

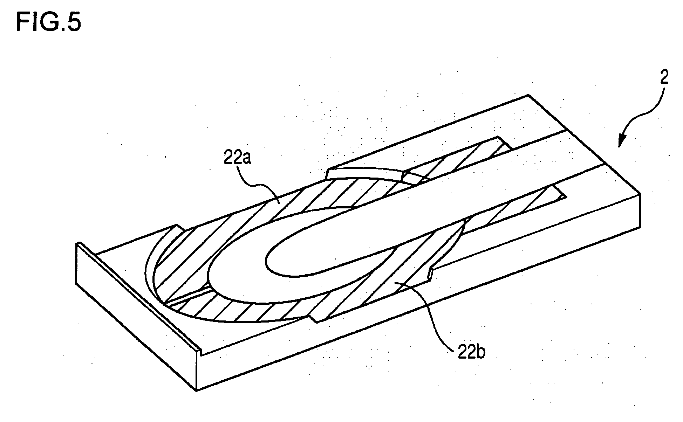

A conductive paint containing fine nickel powder as a primary component is sprayed onto the paint mask X in the state shown in Fig. 4. Subsequently, the paint mask X is removed with the result that the tray 2 provided with the first and second electrodes 22a and 22b on the surface is manufactured, as shown in Fig. 5. Fig. 5 shows the tray 2 provided with the first and second electrodes 22a and 22b on the surface. The first and second electrodes 22a and 22b have a substantially uniform thickness. For example, the thickness is 25 $\mu$m.

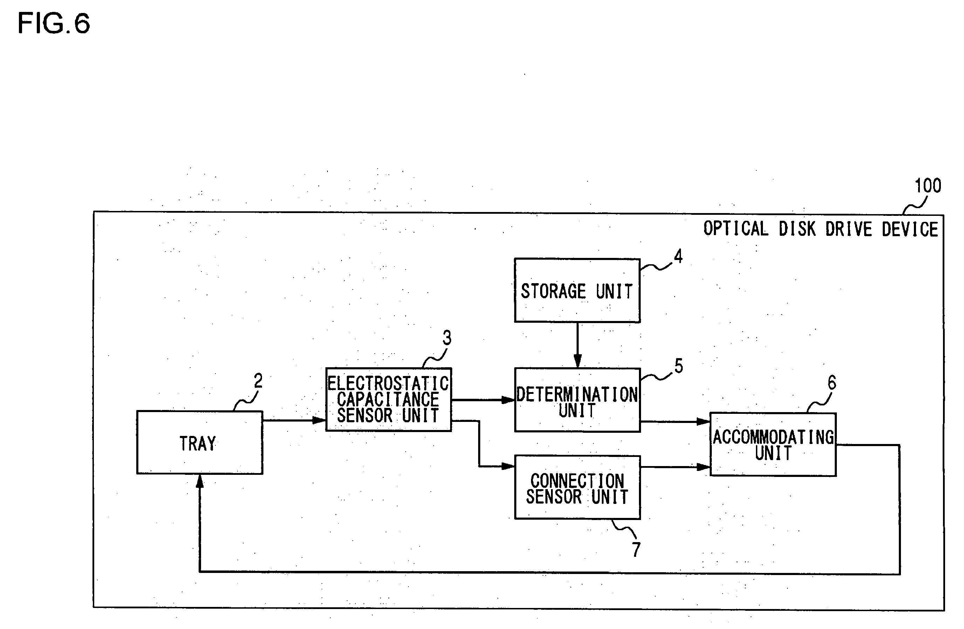

A description will be given of the function of the optical disk drive device 100 with reference to Fig. 6. Fig. 6 is a functional block diagram of the optical disk drive device 100. As shown in Fig. 6, the optical disk drive device 100 is provided with an electrostatic capacitance sensor unit 3, a storage unit 4, a determination unit 5, an accommodating unit 6, and a connection sensor unit 7. The optical disk drive device 100 is provided with an optical system compatible with CDs, an optical system compatible with DVDs, and an optical system compatible with BDs (not shown in Fig. 6) and is configured to discriminate between three types of optical disks as described later. However, the optical disk drive device 100 may be constructed otherwise. In other words, the optical disk drive device 100 may be provided with optical systems compatible with at least two types of optical disks and configured to discriminate between at least two types of optical disks.

The electrostatic capacitance sensor unit 3 senses electrostatic capacitance between the first electrode 22a and the optical disk and between the second electrode 22b and the optical disk occurring when the optical disk is mounted on the first and second electrodes 22a and 22b.

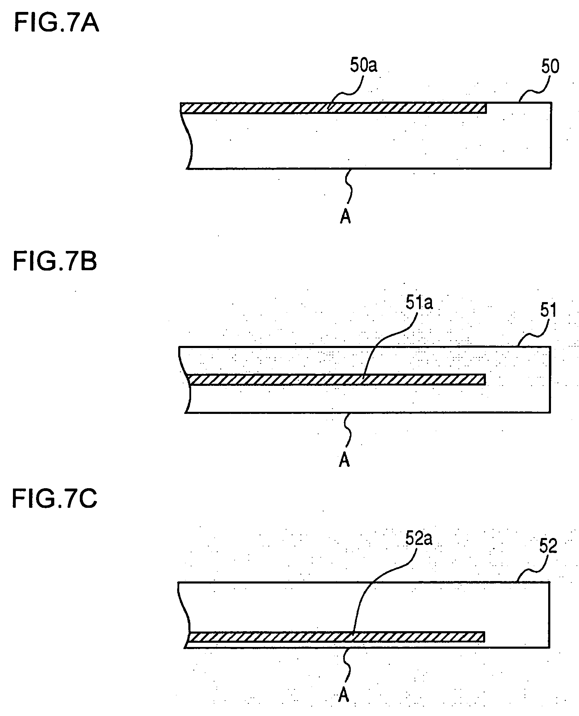

Optical disks currently available today include CDs, DVDs, and BDs. All types of disks have a diameter of 12 cm and a thickness of 1.2 mm. The disks are mounted on the outer disk tray 21b. More specifically, CDs, DVDs, and BDs are mounted on the first and second electrodes 22a and 22b provided on the outer disk tray 21b. The cross section of CDs, DVDs, and BDs will be explained with reference to Figs. 7A-7C. Fig. 7 shows a partial cross section of a CD 50, Fig. 7B shows a partial cross section of a DVD 51, and Fig. 7C shows a partial cross section of a BD 52.

As shown in Fig. 7A, an information recording layer 50a of the CD50 is located toward the top. More specifically, the information recording layer 50a is provided at a distance of 1.2 mm from the surface A of beam incidence. As shown in Fig. 7B, an information recording layer 51a of the DVD 51 is located in the middle of the thickness. More specifically, the information recording layer 51a is provided at a distance of 0.6 mm from the surface A of beam incidence and so is closer to the surface A of beam incidence than the information recording layer 50a shown in Fig. 7A. As shown in Fig. 7C, an information recording layer 52a of the BD 52 is toward the surface A of beam incidence. More specifically, the information recording layer 52a is provided at a distance of 0.1 mm from the surface A of beam incidence and so is closer to the surface A of beam incidence than the information recording layer 51a shown in Fig. 7B.

The information recording layer 50a, the information recording layer 51a, and the information recording layer 52a are formed with a metal reflective film of aluminum or the like in contact with the rear surface of the information recording layer in order to improve the reflectivity. The CD 50, the DVD 51, and the BD 52 are mostly formed of a resin such as polycarbonate except in the information recording layer and the metal reflective film. Therefore, electrostatic capacitance is created between the information recording layer and the first electrode 22a and between the information recording layer and the second electrode 22b as the optical disk is mounted on the first and second electrodes 22a and 22b. In other words, electrostatic capacitance is created between the optical disk and the first and second electrodes 22a/22b.

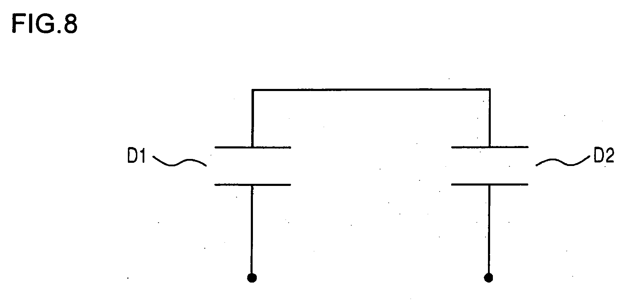

State otherwise, a first capacitor D1 is formed between the optical disk and the first electrode 22a and a second capacitor D2 is formed between the optical disk and the second electrode 22b, as shown in Fig. 8. Fig. 8 shows a circuit formed by the optical disk, the first electrode 22a, and the second electrode 22b. As shown in Fig. 8, the first and second capacitors D1 and D2 are connected in series.

Generally, the capacitance c of a capacitor is given by the following expression (1).
$$c = \varepsilon_0 \times \varepsilon_1 \times S/d \quad \ldots \quad (1)$$

where S denotes the area of electrodes, d denotes the distance between the electrodes, $\varepsilon_0$ denotes the dielectric in the vacuum, and $\varepsilon_1$ denotes the relative dielectric constant of a dielectric body. Denoting the electrostatic capacitance of the first capacitor D1 as C1, the electrostatic capacitance of the second capacitor D2 as C2, and the electrostatic capacitance of the circuit of Fig. 8 as a whole as C3, the electrostatic capacitance C3 of the circuit as a whole is given by the following expression (2).
$$C3 = C1 \times C2/(C1+C2) \quad \ldots \quad (2)$$

As mentioned above, the first and second electrodes 22a and 22b are provided on the outer disk tray 21b isolated from each other so as to substantially halve the area of the outer disk tray 21b. In other words, the area of the first electrode 22a is substantially identical to the area of the second electrode 22b. Therefore, the electrostatic capacitance C1 of the first capacitor D1 is substantially identical to the electrostatic capacitance C2 of the second capacitor D2. Given that the electrostatic capacitance of the first and second capacitors D1 and D2 is C, C3=C/2.

As described with reference to Fig. 7, the distance from the surface of beam incidence and the information recording layer differs depending on the type of optical disk. In other words, the distance d between the electrode and the information recording layer differs depending on the type of optical disk. Accordingly, the electrostatic capacitance C3 of the circuit shown in Fig. 8 as a whole differs depending on the type of optical disk. The electrostatic capacitance sensor unit 3 senses the electrostatic capacitance C3 of the circuit shown in Fig. 8 as a whole and differing depending on the type of optical disk.

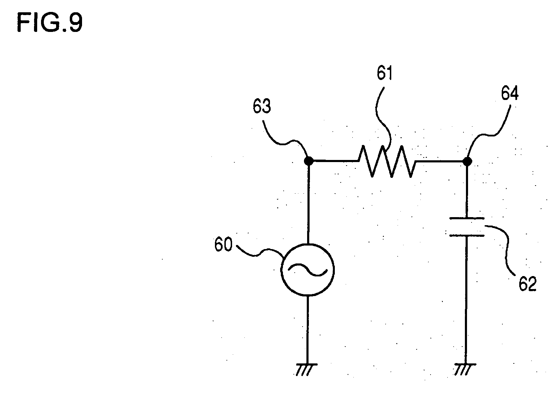

Subsequently, a specific method of sensing the electrostatic capacitance C3 of the circuit shown in Fig. 8 as a whole will be described with reference to Fig. 9. Fig. 9 shows a circuit shown to describe the method of sensing the electrostatic capacitance C3 of the circuit shown in Fig. 8 as a whole. Fig. 9 shows an ac signal generator 60, a capacitor 62, and a resistor 61 provided between the ac signal generator 60 and the capacitor 62. The capacitor 62 represents the capacitor of the circuit shown in Fig. 8 as a whole. In this case, the electrostatic capacitance sensor unit 3 measures the voltage at a node 64 joined to the resistor 61 with respect to the other node 64.

Given that the output voltage of the ac signal generator 60 is denoted by V1, the oscillation angular frequency is denoted by $\omega$, the voltage at the node 64 with respect to the node 63 is denoted by V2, and the resistance value of the resistor 61 is denoted by R1, the voltage V2 is given by the following expression (3).
$$V2=V1/(j\omega C3\times R1+1) \quad \ldots \quad (3)$$

Fixing the output voltage V1, the oscillation angular frequency ω, and the resistance value R1 at specific values, the electrostatic capacitance sensor unit 3 is capable of sensing the electrostatic capacitance of the capacitor 62, which represents the capacitor of circuit shown in Fig. 8 as a whole, by measuring the voltage at the node 64. The electrostatic capacitance sensor unit 3 of Fig. 6 senses the electrostatic capacitance between the first and second electrodes 22a/22b and the optical disk occurring when the optical disk is mounted on the first and second electrodes 22a and 22b, by measuring the voltage at the node 64.

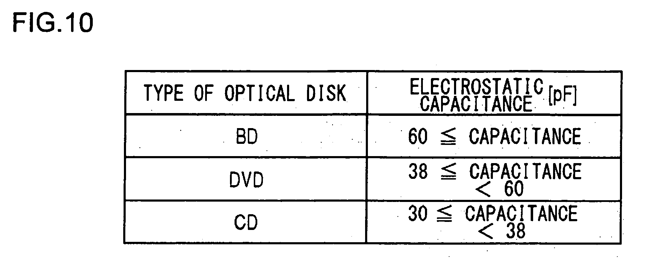

A description will now be given of the storage unit 4 of Fig. 6. The storage unit 4 stores a table that identifies the electrostatic capacitance between any of different types of optical disks and the first and second electrodes 22a/22b occurring when the optical disk is mounted on the first and second electrodes 22a and 22b. Fig. 10 shows a table that identifies the electrostatic capacitance between each of a CD, a DVD, and a BD, and the electrodes. Fig. 10 is a table provided for a case where the area of the first and second electrodes 22a and 22b is about 2400 mm$^2$, the relative dielectric constant of polycarbonate ε1 is 2.9, and the gap between the optical disk and the electrodes is 0.155 mm.

As shown in Fig. 10, the table shows that the electrostatic capacitance between a CD and the electrodes occurring when the CD is mounted on the first and second electrodes 22a and 22b is such that 30 pF≤C3<38 pF, the electrostatic capacitance between a DVD and the electrodes occurring when the DVD is mounted is such that 38 pF≤C3<60 pF, and the electrostatic capacitance between a BD and the electrodes occurring when the BD is mounted is such that 60 pF≤C3. Numerical values indicated in the table are results obtained through a large number of experiments.

A description will now be given of the determination unit 5 of Fig. 6. The determination unit 5 determines the type of optical disk mounted on the first and second electrodes 22a and 22b based on the sensor result obtained by the electrostatic capacitance sensor unit 3 and the table stored in the storage unit 4. For example, if the electrostatic capacitance obtained by the electrostatic capacitance sensor unit 3 is 45 pF, the determination unit 5 determines that the optical disk mounted is a DVD. Thus, the optical disk drive device 100 is capable of determining the type of optical disk mounted in a short period of time because it is not necessary to actually emit light or change the objective lens. As a result, the time elapsed since the optical disk is mounted on the tray 2 until playback or recording is initiated is shorter than in the related art.

A description will be given of the accommodating unit 6 of Fig. 6. The accommodating unit 6 operates to accommodate the entirety of the tray 2 in the housing 1, when an optical disk is mounted on the first and second electrodes 22a and 22b while a part of the tray 2 is located outside the housing 1, and when the type of the mounted optical disk is identified. This makes it unnecessary for the user to accommodate the tray 2 in the housing 1 by, for example, using a button. In other words, user convenience is improved as compared with the related art.

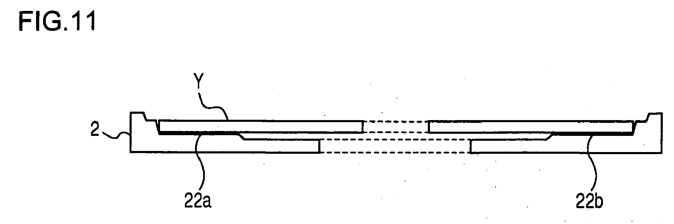

When an optical disk Y is mounted on the first and second electrodes 22a and 22b so as to be in contact with the first and second electrodes 22a and 22b, as shown in Fig. 11, the electrostatic capacitance sensor unit 3 is capable of sensing the electrostatic capacitance between the first and second electrodes 22a/22b and the optical disk Y accurately. Fig. 11 shows that the optical disk Y is mounted on the first and second electrodes 22a and 22b so as to be in contact with the first and second electrodes 22a and 22b.

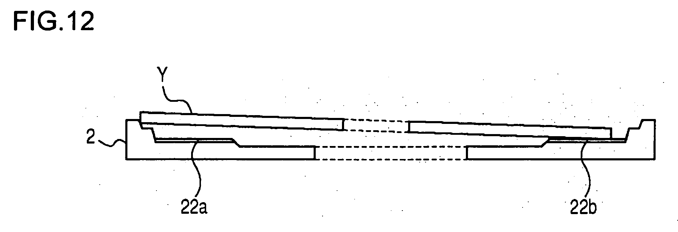

However, the optical disk Y may be mounted inclined with respect to the surface of the first and second electrodes 22a and 22b, as shown in Fig. 12. Fig. 12 shows that a disk is mounted inclined with respect to the surface of the first and second electrodes 22a and 22b. In the case of Fig. 12, the result obtained by the electrostatic capacitance sensor unit 3 indicates electrostatic capacitance smaller than that occurring when the CD is mounted as shown in Fig. 11. When the optical disk Y is mounted inclined with respect to the surface of the first and second electrodes 22a and 22b as shown in Fig. 12, the electrostatic capacitance is smaller than when the optical disk is mounted as shown in Fig. 11, as clearly known from expression (1). In other words, when the optical disk is mounted as shown in Fig. 12, the electrostatic capacitance sensed by the electrostatic capacitance sensor unit 3 is smaller than the electrostatic capacitance of any of the optical disks listed in the table shown in Fig. 10. For example, the capacitance will be 18 [pF]. In this case, the determination unit 5 determines that an optical disk is not mounted. As a result, the accommodating unit 6 does not accommodate the tray 2 in the housing 1. This prevents the optical disk not mounted properly from being loaded in the housing 1 and prevents damage to the tray 2 and the optical disk.

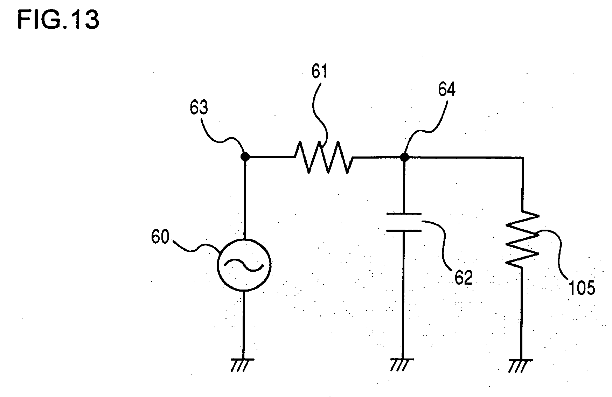

A description will be given of the connection sensor unit 7 of Fig. 6. The connection sensor unit 7 senses connection between the first and second electrodes 22a and 22b via a conductor. For example, the connection sensor unit 7 senses that the user's hand is in contact with the first and second electrodes 22a and 22b. Fig. 13 shows an equivalent circuit occurring when the first and second electrodes 22a and 22b are connected via a conductor. Fig. 13 shows a second resistor 105 connected to the node 64 in addition to the circuit elements shown in Fig. 6. The second resistor 105 is an example of a conductor connecting the first and second electrodes 22a and 22b.

As contrasted with the circuit shown in Fig. 9, the voltage at the node 64 in the circuit shown in Fig. 13 is dropped to a voltage value determined by the voltage division ratio between the resistance value R1 of the resistor 61 and the resistance value R2 of the second resistor R2. In other words, the electrostatic capacitance sensor unit 3 obtains a waveform not exhibiting attenuation from the output waveform of the ac signal generator 60, if the first and second electrodes 22a and 22b are not connected via a conductor. If the first and second electrodes 22a and 22b are connected via a conductor, the electrostatic capacitance sensor unit 3 obtains a waveform exhibiting attenuation from the output waveform of the ac signal generator 60. If the electrostatic capacitance sensor unit 3 obtains a waveform exhibiting attenuation from the output waveform of the ac signal generator 60, the determination unit 5 may falsely determine that a CD, a DVD, or a BD is properly mounted on a tray despite the fact that the optical disk is not properly mounted due to the connection between the first and second electrodes 22a and 22b via a conductor.

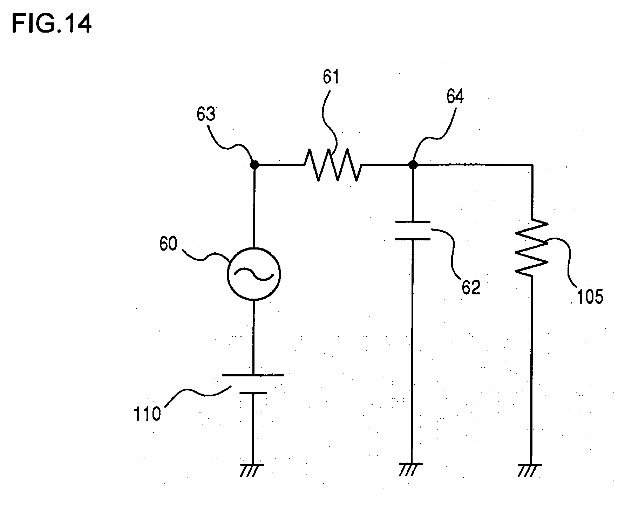

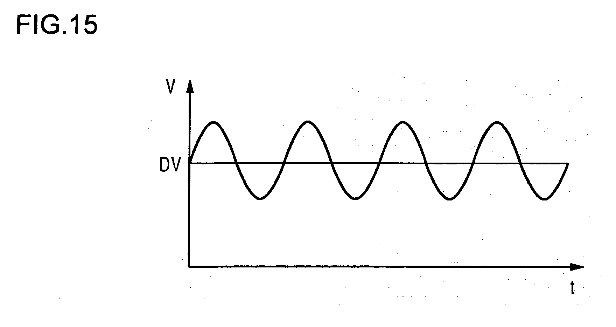

The circuit shown in Fig. 14 designed to eliminate the chance of false determination will be considered. Fig. 14 shows a circuit for eliminating the chance of falsely determining that a CD, a DVD, or a BD is mounted on a tray despite the fact that no optical disks are mounted. In addition to the circuit elements shown in Fig. 13, Fig. 14 shows a bias dc current generator 110 connected in series with the ac signal generator 60. When no optical disks are mounted and when the first and second electrodes 22a and 22b are not connected via a conductor, the electrostatic capacitance sensor unit 3 of the circuit show in Fig. 14 obtains a waveform shown in Fig. 15. More specifically, the electrostatic capacitance sensor unit 3 obtains a waveform centered on a voltage equal to the bias voltage DV and not exhibiting attenuation from the output waveform of the ac signal generator 60.

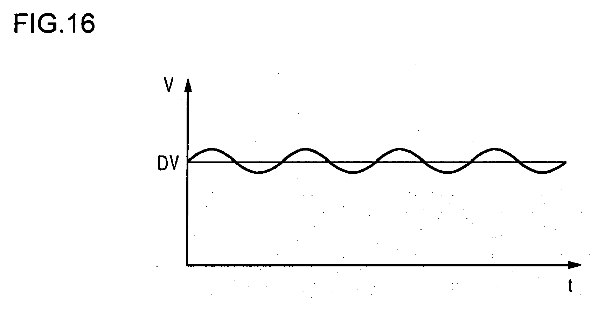

In contrast, when an optical disk is properly mounted on a tray and when the first and second electrodes 22a and 22b are not connected via a conductor, the electrostatic capacitance sensor unit 3 of the circuit show in Fig. 14 obtains a waveform shown in Fig. 16. More specifically, the electrostatic capacitance sensor unit 3 obtains a waveform centered on a voltage equal to the bias voltage DV and exhibiting attenuation from the output waveform of the ac signal generator 60.

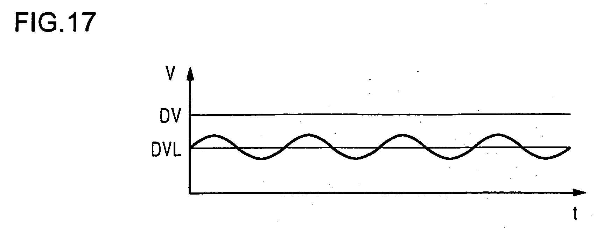

Lastly, when the first and second electrodes 22a and 22b are connected via a conductor, the electrostatic capacitance sensor unit 3 of the circuit show in Fig. 14 obtains a waveform shown in Fig. 17. More specifically, the electrostatic capacitance sensor unit 3 obtains a waveform centered on a voltage DVL lower than the bias voltage DV and exhibiting attenuation from the output waveform of the ac signal generator 60.

Therefore, by using the electrostatic capacitance sensor unit 3 to sense the voltage at the node 64 using the circuit shown in Fig. 14 to sense the voltage at the node 64, the connection sensor unit 7 of Fig. 6 is capable of sensing a state in which no optical disks are mounted on a tray and the first and second electrodes 22a and 22b are not connected via a conductor, based on the waveform obtained by the electrostatic capacitance sensor unit 3. The connection sensor unit 7 is also capable of sensing a state in which an optical disk is properly mounted on a tray and the first and second electrodes 22a and 22b are not connected via a conductor.

Further, the connection sensor unit 7 is capable of sensing a state in which the first and second electrodes 22a and 22b are connected via a conductor. More specifically, the connection sensor unit 7 detects that the first and second electrodes 22a and 22b are connected via a conductor when the waveform shown in Fig. 17 is obtained by the electrostatic capacitance sensor unit 3. When the first and second electrodes 22a and 22b are detected to be connected via a conductor, the accommodating unit 6 does not accommodate the tray 2 in the housing 1. As a result, damage to the tray 2 can be prevented.

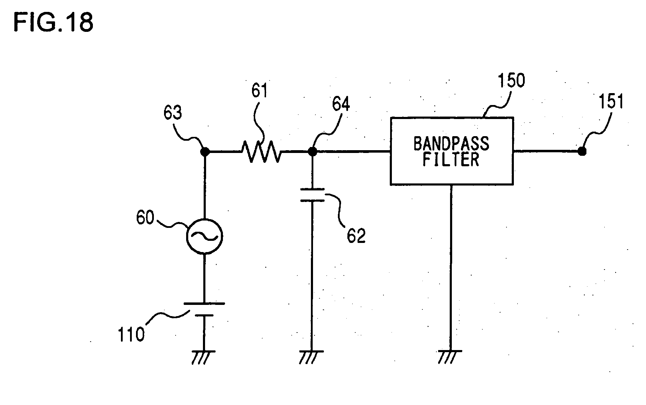

In the case that the optical disk drive device 100 is operated by a commercial voltage, a voltage having a frequency of the commercial voltage is induced in the electrode when the human body comes into contact with or approaches one of the first and second electrodes 22a and 22b. This causes large variation in the voltage at the node 64. This may result in false determination by the determination unit 5. To prevent false determination, a circuit may be used in which a bandpass filter 150 with a passband equal to the frequency (e.g., 50-60 Hz) of the commercial voltage source is connected to the node 64, as shown in Fig. 18. In this case, too, the electrostatic capacitance sensor unit 3 senses the voltage at the node 64.

When the human body comes into contact with or approaches one of the first and second electrodes 22a and 22b, the electrostatic capacitance sensor unit 3 senses the voltage filtered by the bandpass filter 150 and having the frequency component of the commercial voltage. This allows the connection sensor unit 7 to detect that the human body comes into contact with or approaches one of the first and second electrodes 22a and 22b. When it is detected that the human body comes into contact with or approaches one of the first and second electrodes 22a and 22b, the accommodating unit 6 does not accommodate the tray 2 in the housing 1. As a result, damage to the tray 2 can be prevented.

In the embodiment described above, it is assumed that the first and second electrodes 22a and 22b are provided on the outer disk tray 21b. Alternatively, the first and second electrodes 22a and 22b may be provided inside the housing 1 so as to be above the outer disk tray 21b when the tray 2 is accommodated in the housing 1. In other words, the first and second electrodes 22a and 22b may be provided inside the housing 1 so as to be opposite to the outer disk tray 21b when the tray 2 is accommodated in the housing 1.

Alternatively, the first and second electrodes 22a and 22b may be provided on the inner disk tray 21a, or at positions opposite to the inner disk tray 21a when the tray 2 is accommodated in the housing 1.

The first and second electrodes 22a and 22b may not be of a size that substantially halve the outer disk tray 21b. In other words, the electrodes may not be of a size that substantially covers the outer disk tray 21b. In any case, the storage unit 4 stores a table that allows identification of an optical disk mounted on the tray.

The first and second electrodes 22a and 22b may be of different sizes. In this case, the electrostatic capacitance sensor unit 3 senses the accurate electrostatic capacitance by using a coefficient for correction.

Upon identifying the type of optical disk mounted on the tray using the determination unit 5, the optical disk drive device 100 may verify the type of optical disk by emitting a beam actually, as is done in the related art. Further, if the result obtained by the electrostatic capacitance sensor unit 3 indicates capacitance smaller than the capacitance value associated with any of the optical disk types listed in the table stored in the storage unit 4 and it is determined that no optical disks are mounted on the tray, or if the connection sensor unit 7 detects that the first and second electrodes 22a and 22b are connected via a conductor, the fact may be displayed on a screen (not shown) or audio alert may be generated to indicate the fact.

[DESCRIPTION OF THE REFERENCE NUMERALS]

100 optical disk drive device, 1 housing, 2 tray, 21a inner disk tray, 21b outer disk tray, 22a first electrode, 22b second electrode, 3 electrostatic capacitance sensor unit, 4 storage, 5 determination unit, 6 accommodating unit, 7 connection sensor unit, 151 output end.

[INDUSTRIAL APPLICABILITY]

The present invention can be used in an optical disk drive device for processing optical disks.

**Claims**

1. An optical disk drive device comprising:

   a tray provided with a disk tray on which an optical disk is mounted;
   an accommodating unit configured to accommodate the tray in a housing;
   an electrode provided on the disk tray;
   an electrostatic capacitance sensor unit configured to sense electrostatic capacitance between the electrode and an optical disk mounted in proximity to the electrode;
   a storage unit configured to store a table that identifies electrostatic capacitance between each of different types of optical disks and the electrode occurring when the optical disk is mounted in proximity to the electrode; and

   a determination unit configured to determine the type of the optical disk mounted in proximity to the electrode, based on a sensor result obtained by the electrostatic capacitance sensor unit and the table.

2. The optical disk drive device according to claim 1, wherein the disk tray is an outer disk tray provided outside an inner disk tray at the center of the tray, an optical disk having a first diameter being mounted on the inner disk tray, and an optical disk having a second diameter longer than the first diameter being mounted on the outer disk tray, and
   the electrode comprises two individual electrodes provided to substantially halve an area of the outer disk tray such that the individual electrodes are isolated from each other on the outer disk tray.

3. The optical disk device according to claim 1 or claim 2,
   wherein the determination unit determines that an optical disk is mounted on the tray if the sensor result obtained by the electrostatic capacitance sensor unit indicates electrostatic capacitance corresponding to one of the types of optical disks stored in the table, and
   the accommodating unit accommodates the tray in the housing if the determination unit determines that an optical disk is mounted on the tray.

4. The optical disk drive device according to one of claims 1 through 3, further comprising:

   a connection sensor unit configured to sense a state in which the two electrodes are connected via a conductor and to sense contact with a human body,
   wherein, when the connection sensor unit senses that the two electrodes are connected via a conductor or senses contact with a human body, the accommodating unit does not accommodate the tray in the housing even if the determination unit determines that an optical disk is mounted on the tray.

FIG.1

FIG.2

FIG.3

FIG.4

FIG.5

# FIG.6

OPTICAL DISK DRIVE DEVICE 100

STORAGE UNIT 4

ELECTROSTATIC CAPACITANCE SENSOR UNIT 3

DETERMINATION UNIT 5

TRAY 2

CONNECTION SENSOR UNIT 7

ACCOMMODATING UNIT 6

EP 2 479 753 A1

13

## FIG.7A

## FIG.7B

## FIG.7C

FIG.8

FIG.9

FIG.10

| TYPE OF OPTICAL DISK | ELECTROSTATIC CAPACITANCE [pF] |
|---|---|
| BD | $60 \leqq$ CAPACITANCE |
| DVD | $38 \leqq$ CAPACITANCE $< 60$ |
| CD | $30 \leqq$ CAPACITANCE $< 38$ |

FIG.11

FIG.12

FIG.13

FIG.14

FIG.15

FIG.16

FIG.17

FIG.18

## INTERNATIONAL SEARCH REPORT

| | International application No. |
|---|---|
| | PCT/JP2010/005504 |

**A. CLASSIFICATION OF SUBJECT MATTER**
*G11B19/12*(2006.01)i, *G11B7/004*(2006.01)i, *G11B19/02*(2006.01)i

According to International Patent Classification (IPC) or to both national classification and IPC

**B. FIELDS SEARCHED**

Minimum documentation searched (classification system followed by classification symbols)
G11B19/12, G11B7/004, G11B19/02

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2003-317240 A (TDK Corp.),<br>07 November 2003 (07.11.2003),<br>paragraphs [0038] to [0098]; fig. 1 to 22<br>& WO 2003/091994 A1 & US 2005/0157621 A1 | 1,2<br>3<br>4 |
| Y<br>A | JP 2002-15502 A (Funai Electric Co., Ltd.),<br>18 January 2002 (18.01.2002),<br>paragraphs [0009] to [0024]; fig. 1 to 3<br>(Family: none) | 3<br>4 |
| A | JP 2002-298486 A (Shinano Kenshi Co., Ltd.),<br>11 October 2002 (11.10.2002),<br>paragraphs [0009] to [0031]; fig. 1 to 4<br>(Family: none) | 1-4 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 November, 2010 (29.11.10) | Date of mailing of the international search report<br>07 December, 2010 (07.12.10) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

| International application No. |
|---|
| PCT/JP2010/005504 |

| **Box No. II**     **Observations where certain claims were found unsearchable (Continuation of item 2 of first sheet)** |
|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| **Box No. III**     **Observations where unity of invention is lacking (Continuation of item 3 of first sheet)** |
|---|

This International Searching Authority found multiple inventions in this international application, as follows:

```
    The invention in claim 1 does not have a special technical feature in the
light of the contents disclosed in JP 2003-317240 A (TDK Corp.), 7 November
2003 (07.11.2003), paragraphs [0038] - [0098], [fig. 1] - [fig. 22].

                                             (continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2010/005504 |

Continuation of Box No.III of continuation of first sheet(2)

The invention in claim 1 relates to a configuration wherein an electrostatic capacity detection unit is provided on a mounting section for an optical disc, and kinds of optical discs are specified according to the result of detection.

The invention in claim 2 relates to arrangement of electrodes in an electrostatic capacity detection unit.

The inventions in claim 3 and claim 4 relate to operation of a tray according to the result of detection of optical discs.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 10143986 A